(19) Europäisches Patentamt
European Patent Office
Office européen des brevets

(11) EP 1 279 999 A1

(12) EUROPEAN PATENT APPLICATION

(43) Date of publication:
29.01.2003 Bulletin 2003/05

(51) Int Cl.$^7$: G02F 1/225

(21) Application number: 01401964.0

(22) Date of filing: 23.07.2001

(84) Designated Contracting States:
AT BE CH CY DE DK ES FI FR GB GR IE IT LI LU MC NL PT SE TR
Designated Extension States:
AL LT LV MK RO SI

(71) Applicant: Corning Incorporated
Corning, New York 14831 (US)

(72) Inventors:
- Fondeur, Barthelemy, Corning Incorporated
Corning, NY 14831 (US)
- Chun, Lip Sun How Kee, Corning Incorporated
Corning, NY 14831 (US)

(74) Representative: Boon, Graham Anthony et al
Elkington and Fife,
Prospect House,
8 Pembroke Road
Sevenoaks, Kent TN13 1XR (GB)

# (54) Polarization-insensitive variable optical attenuator

(57) A polarization-insensitive broad-band variable optical attenuator (10) includes a first thermally tuned Mach-Zehnder interferometer (MZI) stage (12) having a polarization dependence loss mainly in a first polarization direction and a second thermally tuned Mach-Zehnder interferometer (MZI) stage (14) coupled in series, or cascaded, to the first Mach-Zehnder stage (12) and having a polarization dependence loss mainly in a second polarization direction perpendicular to the first polarization direction and arranged such that the polarization dependent loss of the second stage compensates that of the first stage to achieve polarization insensitivity.

FIG. 1

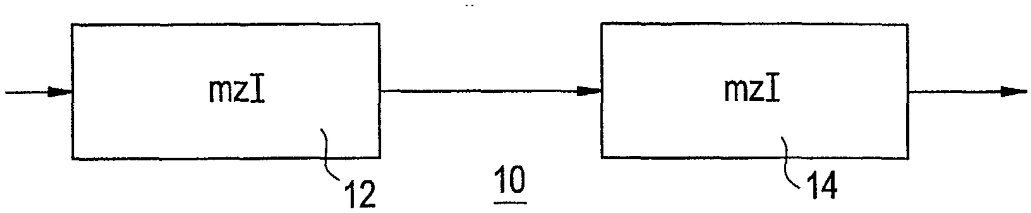




Printed by Jouve, 75001 PARIS (FR)

## Description

## BACKGROUND OF THE INVENTION

1. Field of the Invention

The present invention relates generally to thermo-optical components particularly for use in optical communications networks, such as a variable optical attenuator (VOA), a switch or other optical components.

2. Technical Background

Optical networks employing wavelength division multiplexing (WDM) and dense wavelength division multiplexing (DWDM) are receiving great interest due to their ability to carry enormous amounts of information over a single optical fiber. Such networks typically require the monitoring and adjustment of the power levels of each wavelength component in order to produce a balanced output performance. This automatic power control is usually performed by attenuators in the optical cross-connects or in other network nodes where the signals are demultiplexed into separate waveguides.

Electrically controllable optical attenuators implemented as Mach-Zehnder interferometers (MZI) are known. However, prior Mach-Zehnder interferometers were polarization-sensitive and hence could introduce rapid fluctuations in the optical power in the transmission line owing to the random variations in the state of polarization of the optical signals. Polarization Dependence Loss (PDL) is the insertion loss variation due to variation in polarization states. The Insertion Loss (IL) is different for different polarizations and PDL is defined to be the difference between the maximum and minimum insertion loss: ILmax-ILmin. The difficulty with polarization is that it is highly unpredictable and difficult to understand. Whether TE-loss is higher or lower than TM-loss, is hard to determine, as polarization is caused by a combination of factors. Such fluctuations might also occur in optically amplified WDM or DWDM transmission networks or systems when one or several wavelength channels are added or dropped.

Silica and polymer waveguides for use as the interference arms of planar MZI's are known. Such straight planar waveguides in themselves are very lightly birefringent. But, the polarization dependence loss (PDL) increases as power couplers which are formed by bending the waveguide amplify this slight birefringent behavior. Different types of known splitters, such as Y-junctions, MMI (multi-mode interference)-junctions, directional couplers, star couplers, etc. are used to combine the two interference arms at the input and output of a MZI to form a MZI attenuator. The more the MZI attenuates, the higher will be the resultant PDL.

Electrical phase shifters for causing a thermo-optical effect are also known to be used with the MZI attenuator as a variable optical attenuator (VOA) or switches. The MZI is controlled with an electrical phase-shifter (heater deposited on top of the MZI interference waveguide arms changing its refractive index due to the thermo-optical effect of the waveguide material).

As one optical component example out of others used in a network, a variable optical attenuator (VOA) is one of the basic building blocks of the optical communications system. A VOA merely attenuates signals such as, for example, at an amplifier input so that the signal output remains constant.

The VOA is used to reduce the power level of an optical signal in a tunable manner. In a thermo-optical VOA, the input optical power is higher than the output optical power by a factor of Att in which Att is the variable attenuation coefficient (Att) and is varied by the control signal or applied voltage $V_S$ across a heating element to cause a local change in the refractive index of the VOA. The output optical power is thus proportional to the input optical power reduced by a factor of 1/Att. The magnitude of Att is controlled by $V_S$ and is limited to the range from 0 (zero attenuation for "OFF") to 1 (high attenuation for "ON"). Hence, a VOA with high attenuation is in fact a switch. Common 2x2 switches, for instance, are made by cascading two MZIs with two other MZI's.

Conventional Mach-Zehnder Interferometers (MZI) switches are made with Y-splitters or directional couplers. However, if a good MZI switch with low crosstalk is desired, the directional couplers should be exactly 3 dB. This is very difficult to attain because of process limitations (refractive index variation, waveguide fabrication etc.). With a perfect MZI switch, the maximum attenuation or minimum crosstalk attainable is 30 dB such that if two MZI's are cascaded, the maximum attenuation can reach 60 dB. However, the maximum attenuation required, according to network specifications, is normally around 20 dB. A particular case is for switches where the attenuation or crosstalk should be above 45 dB. A switch can thus be considered to be a very good VOA.

Many types of VOA's are known. The traditional liquid crystal (LC) based VOAs using the transverse electric (TE), instead of the transverse magnetic (TM) field, offer a low voltage, low cost advantage over large and expensive opto-mechanical devices but typically suffer from temperature effects, polarization dependence loss, when the removal of polarization from the different orthogonal coordinates are not equal, or unacceptable insertion losses due to the existence of separate polarizers. A dual polarization path system can be used to overcome these prior-art polarization deficiencies. In such a system, a signal is split into two polarization states (perpendicular and parallel or TM and TE) which can then be input into a polarization-sensitive device and then recombined. However, an added cost is incurred for the addition of polarization splitters and combiners.

Therefore, there is a need for polarization-insensitive, arrayable device or method to control polarization for use as an optical communication component, such as a VOA.

## BRIEF DESCRIPTION OF THE DRAWINGS

FIG. 1 is a representation of an attenuator 10, in accordance with the teachings of the present invention;

FIG. 2 is a graph of the polarization dependence loss (PDL) of the first MZI stage of FIG. 1 showing the polarity trends caused by light being affected differently between an ordinary ray or TE and an extraordinary ray or TM, in accordance with the teachings of the present invention;

FIG. 3 is a a graph of the polarization dependence loss (PDL) of the second MZI stage of FIG. 1 showing the polarity trends caused by light being affected differently between an ordinary ray or TE and an extraordinary ray or TM, in accordance with the teachings of the present invention;

FIG. 4 is a block diagram of the internal structure of the two MZI stages of FIG. 1, in accordance with the teachings of the present invention;

FIG. 5 is an example of the use of Y-junction splitters as the couplers 50, 51, 56 and 57 of FIG. 4, in accordance with the teachings of the present invention;

FIG. 6 is a dual-symmetrical implementation of the two stages of FIG. 1, in accordance with the teachings of the present invention;

FIG. 7 is a disymmetric implementation of the two stages of FIG. 1, with a positive dn/dt material, in accordance with the teachings of the present invention;

FIG. 8 is a disymmetric implementation of the two stages of FIG. 1, with a negative dn/dt material, in accordance with the teachings of the present invention;

FIG. 9 is an experimental polarization dependence graph of a full cycle operation of a normal single-stage MZI, simulated by two MZI stages splitting the cycle in half and each stage operating on opposed halves of the normal cycle, in accordance with the teachings of the present invention; and

FIG. 10 is a graph of PDL versus attenuation for the attenuator 10 of FIG. 1, in accordance with the teachings of the present invention;

FIG. 11 is a graph showing the polarization insensitivity measured from a real double stage VOA; and

FIG. 12 is a specific example of the use of Y-junctions as couplers 50 and 56 and directional couplers as couplers 51 and 57 fo FIG. 4, in accordance with the teachings of the present invention and specifically designed so that for zero electrical voltage there is a fixed attenuation value (here it is 6 dB).

## DETAILED DESCRIPTION OF THE PREFERRED EMBODIMENTS

A variable optical attenuator (VOA) which is polarization insensitive is taught by the teachings of the present invention of a novel scheme of MZI cascading compensation. Because the polarization compensation is on the insertion loss level, the attenuation level is uniform for all polarization states. The present invention aims as well at wavelength independence with a flat spectral response.

Broadbanding is in fact chromatic compensation and compensating for PDL provides broadbanding. For one MZI network, the wavelength dependence is in one direction while for the other MZI network, the wavelength dependence is in the opposite direction. However, the present invention teaches the compensation of PDL. But as a consequence of PDL compensation, a broadband VOA automatically results. Hence, once PDL is compensated, chromaticity is corrected also. However, correcting chromaticity first does not correct PDL.

Like PDL, chromaticity is also in the amplitude level. Chromaticity is defined to be where the insertion loss is different for different wavelengths. Prior chromaticity-compensation schemes cascaded two asymmetric MZIs to obtain a broadband VOA by providing spectral compensation of the attenuation. In contrast, the present invention teaches that when PDL is first compensated, chromatic flatness follows. Without phase shifting, PDL is not corrected to provide a polarization-insensitive attenuator.

The refractive index (n) is a function of both wavelength and temperature. It is also well known that planar waveguides for MZI can be made out of inorganic materials, such as silica, polymer and semiconductors such as InP. To take two examples, silica has a positive temperature coefficient of the waveguide material while polymer has a negative coefficient where the temperature coefficient is defined to be the refractive index variation with temperature (dn/dT).

According to the thermo-optical effect, the coupling region in known MZI's can be varied by changing the refractive index. When a heating electrode on part of the waveguide is heated or otherwise energized, the refractive index is modified, thus creating a change in the optical path of light in the waveguide. A voltage $V_S$ is applied to the heating electrode to create the Joule effect on the resistance of the heater. Because of the heat propagation into the waveguide, the refractive index is modified due to the dn/dT or thermo-optical effect. The heating effect introduces a phase shift on the heated arm which in turn affects the output optical power. The phase shift is given by the known expression :

$$\varphi = \frac{2\pi}{\lambda}\left(\frac{n}{L}\frac{\partial L}{\partial T} + \frac{\partial n}{\partial T}\right)L\Delta T \qquad \text{(Eq. 1)}$$

where $\lambda$ is the wavelength in vacuum, L is the heater length and $\Delta T$ the temperature change.
The $\frac{n}{L}\frac{\partial L}{\partial T}$ term being small compared to $\frac{\partial n}{\partial T}$, the first term is usually neglected.
Electrical power and temperature are thus related: when power is applied, power is converted into heat which propagates into the waveguide. This rise in temperature modifies the refractive index and hence the phase difference and is what is termed the thermo-optical effect.

On the other hand, phase shift can also be introduced by introducing a certain disymmetry in the two arms of the MZI following the expression

$$\varphi = \frac{2\pi}{\lambda}n\Delta L \qquad \text{(Eq.2)}$$

where $\Delta L$ is the path length difference between the two arms.
A $2\pi$ phase shift is therefore equivalent to a path difference or disymmetry of $\lambda/n$.

As is known, the symmetric MZI is cyclic or periodical with a period of $2\pi$ phase shift. This cyclic behavior of a symmetric MZI is also cyclic with respect to output power or attenuation.

The PDL compensation discovery was encountered accidentally measurementwise. A conventional single symmetric MZI was first used to make an attenuator. But, the problem was that the higher the attenuation, the higher became the PDL, that is the TE loss became more different than the TM loss.

While playing with the power on the electrode on one arm of a symmetric MZI, the applicant discovered that the PDL trend on the MZI was the reverse when the MZI was overheated in one arm. The single symmetric MZI when tuned electrically would have its PDL change in polarity with a certain trend.

A phase shift was purposely brought about by using a heater on one arm of the symmetric MZI when it was discovered that PDL changes in polarity when the phase difference reaches the $\pi$ value. Between 0 and $\pi$, the PDL behavior appears to be the mirror of that between $\pi$ and $2\pi$. In short, the applicant's discovery was that even if PDL is unpredictable, the PDL behavior can be positive and negative within the same cycle. This cyclical PDL behavior triggered-off the invention of cascading two MZIs designed in such a way that the PDL of the first stage compensates the PDL of the second stage, or vice versa, as long as the asymmetry between the two MZI's was about $2\pi$ when the heating electrode was used to vary one MZI from 0 to $\pi$ in one MZI and $2\pi$ to $\pi$ in the other MZI.

Reference will now be made in detail to the present preferred embodiments of the invention, examples of which are illustrated in the accompanying drawings. Wherever possible, the same reference numbers will be used throughout the drawings to refer to the same or like parts. An exemplary embodiment of the attenuator of the present invention is designated generally throughout by reference numeral 10.

Referring to FIG. 1, the basic structure of the attenuator 10 is shown. An attenuator 10 which is designed to be a polarization-insensitive broad-band variable optical attenuator includes a first Mach-Zehnder interferometer (MZI) stage 12 having a polarization-dependent loss of a first polarity, as seen in curve 20 of FIG. 2 of one example, and a second Mach-Zehnder interferometer (MZI) stage 14 coupled in series, or cascaded, to the first Mach-Zehnder stage 12 and having a polarization dependence loss of an opposite polarity to the first polarity, as seen in curve 30 of FIG. 3.

PDL can be positive or negative depending on the relative values of the TE or TM modes. So if for one stage, the attenuation due to TE(loss) is lower than the attenuation due to TM(loss), on the second stage, a MZI having the reverse behavior (TM lower than TE) is provided. Hence, the secondary cascaded Mach-Zehnder stage 14 compensates the PDL of the first stage 12. As can be seen on FIG. 2, the PDL sign changes when the temperature is above a certain limit (about 11 degrees), corresponding to a phase shift of $\pi$. Similarly, attenuation is cancelled for a phase shift equal to multiple of $2\pi$. Therefore, applying a certain phase shift below $\pi$ on the first stage, and above $\pi$ on the second stage enables the compensation of the polarization sensitivity of each stages.

FIG. 4 shows an example of a general embodiment that may be used to construct the variable VOA 10 of FIG. 1. As shown, the attenuator 10 may be implemented using two Mach-Zehnder interferometer (MZI) stages or networks 12 and 14 each configured to produce a square-sinusoïdal function. Such a pair of interferometers provide relatively flat attenuation, PDL, and chromaticity, over a broad operating wavelength band. As illustrated in FIG. 4, each Mach-Zehnder interferometer stages 12 and 14 includes a coupler 50, which splits the incoming signal on an input waveguide 62, preferably monomode but multi-mode waveguides could also be used, to propagate along two interference arms 52 and 54 of the interferometer. A coupler 56 is provided to couple the ends of the two arms thereby causing interference of the signals propagating through the two arms. The resultant signal is provided at an output of the interferometer. One of the first or second arms of the two interferometers 12 and 14 has a phase shift adjuster or phase shifter 58 that provides that arm with a different optical path length than the other arm so as to introduce a phase shift in one of the two signals that are coupled together by coupler 56 or 57. To allow one of the two interferometers 12 or 14 to compensate for the opposite PDL effect of the other MZI 14 or 12, the phase shift in at least one of the two arms of the interferometer may be adjustable such that the phase shift on one MZI varies from 0 to $\pi$ in one MZI and from $2\pi$ to $\pi$ in the other MZI. By changing the relative phase shift between the two arms, the interference properties within the couplers vary resulting in variable attenuation of the output optical power. The phase shifter or phase shift adjuster can be implemented by either heating one arm or/and providing a longer path between the two MZI's 12 and 14. Since one of the MZIs sees its phase difference vary from $2\pi$ to $\pi$, this phase difference is provided by the combination of a longer path length and heater phase shifter, that is a fixed phase difference of $2\pi$ or path difference of $\lambda/n$ coming from the addition of longer physical path and a variable phase difference coming from the electrical heater which in fact provides a variable phase shift of 0 to $-\pi$. Most often, the longer physical path is introduced by using a double "S" bend 66 of FIG. 5 or by increasing the bend radius in the couplers. In this way, the electrical phase shifters 58 are used to vary one MZI from 0 to $\pi$ in one MZI and $2\pi$ to $\pi$ in the other MZI for PDL compensation while attenuating.

The pair of cascaded Mach-Zehnder interferometers 12 and 14 shown in FIG. 4 is preferably configured to produce an interference signal at the output 64 of the second MZI 14, which attenuates signals across a broadband. As with the input waveguide, the output waveguide 64 is preferably monomode but multi-mode waveguides could also be used to better match with the rest of the system network.

Referring to FIG. 6, the phase adjusters or phase shifters 58 can be electrical heating elements, longer path length extensions, or a combination of both that are located on at least one interference arm waveguide 52 or 54 of at least one MZI 12 and 14. Regardless of whether the MZI 12 or 14 is symmetric, having equal arms, or aymmetric, having unequal arms, the individual phase shift contributions of each of the MZI has to be half of the total attenuation and approaching $\pi$ from opposing directions. Hence, if the phase shift contribution from the first MZI 12 by applying voltage to heat an electrical heating element and extending a path length difference on the first MZI 12 is such that the phase difference between the two interference arm waveguides 52 and 54 of that MZI 12 is between 0 and $\pi$, then the phase shift contribution from the second MZI 14 by using the electrical heating element and path length extension on the other MZI 14 is such that the phase difference between the two interference arm waveguides 52 and 54 of that MZI 14 is between $2\pi$ and $\pi$.

Alternatively to longer path length configurations and in combination to it, the phase shifter or phase shift adjuster of FIG. 4 can be implemented as heating elements such as electrodes placed on both arms 52 and 54 of the two Mach-Zenders. With an electrodes on each of the arms, the electrode on one arm would increase attenuation and the other to decrease it as can be seen in FIG. 12. This case occurs when a fixed attenuation is needed when the VOA is not electrically biased. This placement allows the reduction of energy consumption to reach both passing and extinction states.

Gold electrodes are preferably used because they induce less stress on the underlying silica waveguide layers. The electrode width is about 20-30 $\mu$m and 5 mm long. The resistance is between 50 and 100 ohms so as to restrict the applied voltage within 0-10 V. Electrodes have been designed so as to resist high current density and as high as 3 W of power.

Referring back to FIG. 6, two symmetric MZIs 12 and 14 can be used. However, one of the MZI 12 or 14 has to be overheated so that its individual phase difference is between $\pi$ and $2\pi$. All that is needed for basic compensation is that one of the MZI operates with a phase difference between 0 and $\pi$ and the other between $2\pi$ and $\pi$.

In practice, so as to not overheat the MZIs, for the one that has to operate between $2\pi$ and $\pi$, a path difference correpsonding to $2\pi$ is introduced and hence the heater is used to introduce a phase difference of 0 to $-\pi$ (heater on the shorter arm), as seen in FIG. 7.

Applying a phase shift between $\pi$ and $2\pi$ requires more energy in the second stage 14. Beyond a certain limit of the electrode strength, the heater will break-down or overheat due to an excessive high current density just like a fuse breakdown. The overheating can be avoided by increasing one of the second Mach-Zehnder arm to induce a $2\pi$ phase shift when no voltage is applied. Hence, the PDL compensation and the control of attenuation is possible if the first stage MZI is symmetric and the other asymmetric by a $2\pi$ phase shift. If identical symmetrical MZIs are used, the second MZI 14 (the one working between $2\pi$ and $\pi$) would be heated uselessly and amounting to about a useless loss of about 0.3 to 0.5 W for the π phase shift for silica. That is why a disymmetry is favored in one of the two MZI's 12 or 14.

The present invention teaches a real phase shift on the two MZIs. Theoretically, any configuration of the two MZIs can be used. But electrical heating may not be optimized for some configurations. The preferred approach, when applying the electrical power, is to follow the 0 to π shift on one MZI and to follow the 2π to π shift on the other. The real phase shift is thus divided between the geometrical design and the electrical shift.

A π disymmetry for the second MZI could have been chosen instead, but since in practice, a single voltage for applying heat to the electrodes of each of the MZI 12 and 14 is preferred, a better configuration is to put a 2π disymmetry. Conceptually, the phase difference between the two symmetrical MZI's could be π according to the temperature cycling measurement tests on one MZI. But the disadvantage of using π is that the same power will no longer be applied on both MZIs. Furthermore, for zero voltage applied, the first MZI will be at low attenuation and the second MZI at maximum attenuation and PDL will not be compensated. If a low heat power is applied on the first MZI, the attenuation from the first MZI will be low (attenuation increases with power on the first part of the cycle from 0 to π). But for the second MZI, a high power (attenuation decreases with power on the second part of the cycle from π to 2π) needs to be applied to be in the low attenuation range for PDL compensation. The same power will therefore not be applied on both electrodes and this complicates the VOA control.

Inserting the 2π phase difference therefore provides an advantage. By varying the power (same power on both MZIs 12 and 14), attenuation is increased (same direction for both MZIs 12 and 14) and PDL is compensated at the same time.

To avoid having to use too much heat to cause the 2π phase-shift, disymmetry was introduced to make one arm longer than the other in one of the two MZI's 12 or 14. This non-symmetry, disymmetry or asymmetry introduced is in the wavelength range that is around 1.5 um.

Referring to FIG. 7, an example of the attenuator 10 implemented on a silica platform having a positive dn/dT as the material used for the two MZI's 12 and 14 is shown. The phase shift adjuster of FIG. 7 includes electrical heating elements 72 located on one of the interference arm waveguide 52 or 54 of the first MZI 12 having symmetric arms and on the shorter interference arm 52 of the second MZI 14 having asymmetric arms. A path difference 66 corresponding to λ/n or 2π exists between the longer arm 54 and the shorter arm 52 of the second MZI 14. The electrical heating element 72 on the symmetric MZI 12 is heated such that the phase difference between the two interference symmetric arm waveguides 52 and 54 of that MZI 12 varies between 0 and π. Meanwhile and preferably with the same voltage, the electrical heating element 72 on the shorter arm 52 of the asymmetric MZI 14 is heated such that the phase difference between the two interference arm waveguides 52 and 54 of that asymmetric MZI 14 varies between 2π and π.

Operationally, when V=0, the phase difference is 0 for the symmetric MZI 12 and 2π for the asymmetric MZI 14. When there is no voltage (V=0) applied to either of the heating elements or electrodes 72 of the two MZI's 12 and 14, losses due to attenuation is null except for insertion loss. Each of the MZI 12 and 14 exhibits a square-sinusoidal behavior in its output power trend or (MZI curve) which is cyclic. However, when the applied voltage is increased on the symmetrical MZI 12, the phase difference varies from 0 to π, so that attenuation increases. In the same manner, when the applied voltage is increased on the asymmetrical MZI 14, the phase difference of the assymetrical MZI 14 varies from 2π to π, and again attenuation increases.

Referring to FIG. 9 for the measured polarization dependence graph of a single MZI stage, when the power is increased from 0 to about 0.25 W for the dual MZI configuration of FIG. 7, the phase shift is varied from 0 to π for the symmetric MZI 12. Now for the asymmetric MZI 14, the phase shift is starting from the right end of FIG. 9 and moving to the 0.25W point to obtain polarization dependence of the opposite polarity, relative to the polarity of the first MZI 12. By design, the asymmetric MZI 14 has the longer arm 54 to provide the 2π phase advance (implemented in FIG. 7 simply as a longer path length for light, as one example) with respect to the shorter arm 52. So, if a decrease of this 2π phase advance was desired, the heater or heating element 72 would have to be disposed on the shorter arm 52 so that when the shorter arm 52 was locally heated, the refractive index on the shorter arm 52 and hence the optical path (phase) of the shorter arm (phase difference proportional to index) increases with the positive dn/dt of the material of the MZIs 12 and 14, such as for silica. The phase difference between the the two arms 52 and 54 thus decreases because the shorter arm increases in optical path length while the longer arm having the long optical path length to begin with, stays relatively constant.

In FIG. 9, the square curve represents the insertion loss variation (attenuation) of the TM mode versus power applied. The diamond curve is the attenuation curve of the TE mode versus applied power. Both the diamond and square curves indicate that for a 0 to π shift, the TM curve lags behind the TE curve, and hence PDL is negative. For values above π, the TE curve lags behind TM, and hence the PDL curve becomes positive. Each of the TE and TM curves shows the attenuation attained. The maximum attenuation attained is the peak value which is about (70-45) = 25 dB. The triangle curve is the PDL curve resulting from the substraction of the TE and TM curves. These three curves are for a single MZI. If two of these MZIs are cascaded, in accordance with the present invention, 50 dB attenuation can be reached, but in the inventive VOA, the dual MZIs are not used in their full ranges.

Comparing the effects for one stage versus two MZI stages, the present invention is conceptually breaking down the normal polarization dependence graph of a full cycle operation of a normal single-stage MZI into two halves (not letting each stage phase-shift its full $2\pi$ cycle but stopping at $\pi$), each half simulated by two MZI stages splitting the cycle in half and each stage operating on opposed halves of the normal cycle.

Referring to FIG. 8, if a polymer design having a negative dn/dt was used instead of the silica design, then the heater or applied voltage on the heating element 72 is placed on the longer arm 54 of the asymmetric MZI 14. In this case, when heat is applied locally, the index decreases from the negative dn/dt and the optical path of the longer arm 54 decreases, hence the phase difference between the two arms 52 and 54 is decreased in the aymmetric MZI 14.

Hence, regardless of where the heating electrode is placed to provide the desired phase difference, the disymmetry between the two MZIs 12 and 14 desired is any arrangement that splits up the cycle and yet provides a net path difference between the two MZI 12 and 14 to be $2\pi$ which is about the same as $\lambda/n$ (this phase difference is easily done by adding a disymmetry in design : one arm longer by $\lambda/n$ or $2\pi$ than the other for one MZI). For this net geometrical phase difference between the two MZIs 12 and 14, the individual phase difference between the two interference arms of one MZI is to be from 0 to $\pi$, and the phase difference between the two interference arms of the other MZI is to be $2\pi$ to $\pi$. This variation in phase difference, with the help of electrical heaters, in both MZIs 12 and 14 provides a variable attenuator which is broadband and polarization-insensitive.

For example, if the phase difference between the two interference arms 52 and 54 of the first MZI 12 was 0, the phase difference between the two interference arms 52 and 54 of the second MZI has to be $2\pi$. Another example is if the phase difference between the two interference arms of the first MZI was $\pi$, then the phase difference between the two interference arms of the second MZI is $\pi$. The third example is if the phase difference between the two interference arms of the first MZ network is $\pi/2$, then the phase difference between the two interference arms of the other MZ network has to be $3\pi/2$. This disymetrical and dual MZI cascaded approach allows PDL compensation and also automatically makes the VOA 10 broadband.

The spectral compensation comes subsequently after the PDL compensation has been accomplished. For VOA applications, uneven attenuation following wavelengths is not the goal. Instead, a flattening effect is the aim for VOA's. Owing to the wavelength dependence of directional couplers, the attenuation of a single stage MZI is variable with respect to wavelength and this variability has a certain trend. By introducing a second stage with the reverse trend, the opposite trend in chromaticity is introduced to compensate for the effect of the first stage.

Because both MZIs 12 and 14 are cascaded in series, the total attenuation is then the sum in dB of both attenuations from each of the individual MZI 12 and 14 and this is how more attenuation can be achieved and varied. Hence, applying the same voltage on both the symmetrical MZI 12 and the asymmetrical MZI 14 and using couplers 50 and 56 each having a coupling ratio between 0.43 to 0.57, the maximum attenuation can be easily varied from 0 to 20 dB or even higher if coupling ratio is close to 0.5.

Referring to FIG. 10 and 11, the attenuation can be controlled and an opposite PDL is achieved by the addition of the second opposed PDL MZI whose total attenuation or transmission is calculated by the following simplified equation using Y-junction couplers as in FIG. 5 for simplicity:

$$Att = Cos^2\left(\frac{\pi}{\lambda}\frac{\partial n}{\partial T}L\Delta T_1\right)Cos^2\left(\frac{\pi}{\lambda}(n\delta - \frac{\partial n}{\partial T}L\Delta T_2)\right) \qquad \text{(Eq. 3)}$$

where $\delta = \frac{\lambda_c}{n_{TE}}$ is the length increase in the second MZI to achieve no attenuation for the TE state for instance and L is the electrode length.

If the same voltage is applied on the two electrodes ( $\Delta T_1 = \Delta T_2$ ), the shift between the two TE/TM attenuation states is reduced dramatically, and the PDL remains below 0.5dB across a much wider attenuation range than in the single MZI stage case.

By finely adjusting voltage on the second MZI stage relatively to the first one, the PDL of the two stages can be completely compensated by one another. When the same voltage is applied, $\Delta T_1$ and $\Delta T_2$ must satisfy the following equation :

$$Cos^2\left(\frac{\pi}{\lambda}\frac{\partial n_{TE}}{\partial T}L\Delta T_1\right)Cos^2\left(\frac{\pi}{\lambda}(n_{TE}\delta-\frac{\partial n_{TE}}{\partial T}L\Delta T_2)\right)=$$
$$Cos^2\left(\frac{\pi}{\lambda}\frac{\partial n_{TM}}{\partial T}L\Delta T_1\right)Cos^2\left(\frac{\pi}{\lambda}(n_{TM}\delta-\frac{\partial n_{TM}}{\partial T}L\Delta T_2)\right) \quad \text{(Eq. 4)}$$

In accordance to the teachings of the present invention, the second Mach-Zehnder interferometer (MZI) has a longer arm of around lambda than the first stage in order to achieve opposite polarization and chromaticity slopes. In this way, the second stage can compensate for the first stage's impairments. Because the second stage does not work in the same order (i.e. the path difference is higher than λ/2 for the second stage), the magnitude of the PDL and chromaticity of this stage is slightly higher than the first stage. In order to finely compensate the chromaticity and PDL, non-equal voltages are applied on the two Mach-Zehnders of the device. Not only do the two stages of the component compensate one another as regarding PDL and chromaticity, but they also contribute to increase the attenuation. As a result, high extinction ratios can be achieved with low PDL and chromaticity, a characteristic which is required in optical switches.

Using a Y-junction and a directional coupler for splitting and coupling the two interference arms of the first MZI 12 and similarly, two directional couplers to implement the second MZI 14, the two-stage Mach-Zehnder configuration, with such equal voltage compensation resulted in an optical device having attenuation as high as 15 dB with less than 0.3 dB PDL as shown in FIG. 11.

It is to be appreciated that common MZI design tricks can be applied to fine-tune the cascaded MZI pairs to accommodate the asymmetric MZI 14 working at a different order than the symmetric MZI 12. For example, in order to apply the same voltage on the heaters 72 for applying a different power level on the two MZIs 12 and 14, the heater geometries can be relatively varied.

It is further to be appreciated that if a switch application was desired to obtain higher attenuation, each of the coupling ratio of couplers 50 and 56 should be close to 0.50 or 3 dB.

Because both of the MZI's 12 and 14 of FIG. 7 are bidirectional, the coupler 50 and the coupler 56 can be interchanged with each as they are all power couplers. The power coupler can be implemented as a Y-junction splitter, a multi-mode interference (MMI)-junction splitter, a directional coupler, a star coupler, and other types of arrayed waveguides having one, two, or more inputs or outputs. Different combinations of such couplers can be used in each MZI stage or network, for example as seen in FIG. 5.

Referring to FIG. 12, an input waveguide 62 is optically coupled with an output waveguide 64 by the series combination of the two MZIs 12 and 14 each including the first power coupler 50 of FIG. 4, implemented as a Y-junction splitter 501 and a directional coupler 502, two interference arm waveguides 52 and 54 optically in parallel, and the second power coupler 56. The phase shift adjuster 58 of FIG. 4 is implemented as a path length adjuster 66 for providing a total path length difference of about lambda (λ/n) or 2π between the two Mach-Zehnder networks such that one of the Mach-Zehnder networks 14 has a path length difference of about λ/n with one interference arm waveguide 54 being longer than the other interference arm waveguide 52 by about λ and the other Mach-Zehnder network 12 is symmetric having equal path length arms 52 and 54. Instead of using a Y-junction coupler 561 as the second power combiner 56 in the second MZI 14, a directional coupler 562 could be used. This is a specific example of a VOA where the attenuation in not zero for zero voltage. In this specific design using 3dB directional couplers, the attenuation for zero voltage will be 6 dB. Each arm of the two MZIs has an electrode. The upper heaters 72 increase attenuation whilst the bottom heaters 73 decrease attenuation. Fixed bias phase difference can also be added on at least one of the two MZI's to set the device to any amount of attenuation when no voltage is applied.

The directional coupler 562 or 502 will have a dummy output, such as dummy output 644 and 642 which can be used as a monitoring outputs. An active control system can be implemented where these dummy outputs can be placed in a close-loop feed-back configuration to enable even better attenuation, PDL, and chromaticity control.

Since the two MZIs are preferably fabricated on the same planar wafer that is birefringent, such as inorganic materials made from lithium niobate, polymers, silica, or semiconductors, so that the process conditions are the same, the two MZI's of opposing PDL effects can cancel each other, as long as the asymmetry between the two MZI's is about 2π. By taking advantage of having both MZIs 12 and 14 made under the same conditions (in terms of size, the total dimensions of the two cascaded MZIs is about 40 mm long and 0.5 mm wide) reproducible behavior can be achieved in a relatively easy way.

However, even though planar technology is easier to fabricate, other MZI making technologies, such as fiber, hybrids, micro-optics can be used for both stages of MZI's and for making the input and output waveguides.

The attenuator taught by the present invention, necessary in network applications, is, in itself, polarization-insensitive due to its particular design. The attenuator can be used alone as an optical device, or arrayed with multiple attenuators to form arrayable optical devices.

It will be apparent to those skilled in the art that various modifications and variations can be made to the present invention without departing from the spirit and scope of the invention. Thus, it is intended that the present invention cover the modifications and variations of this invention provided they come within the scope of the appended claims and their equivalents.

## Claims

**1.** A polarization-insensitive broad-band variable optical attenuator comprising:

a first Mach-Zehnder stage having a polarization-dependent loss of a first polarity; and
a second Mach-Zehnder stage coupled in series to the first Mach-Zehnder stage and having a polarization-dependent loss of an opposite polarity to the first polarity.

**2.** The attenuator of claim 1 wherein the first Mach-Zehnder stage comprises an asymmetrical Mach-Zehnder network and the second Mach-Zehnder stage comprises a symmetrical Mach-Zehnder network.

**3.** The attenuator of claim 1 wherein the first Mach-Zehnder stage comprises a symmetrical Mach-Zehnder network and the second Mach-Zehnder stage comprises an asymmetrical Mach-Zehnder network.

**4.** The attenuator of claim 1 wherein the first and second Mach-Zehnder stages are made from the same planar thermo-optic material.

**5.** The attenuator of claim 4 wherein the material is silica.

**6.** The attenuator of claim 4 wherein the material is a polymer.

**7.** The attenuator of claim 4 wherein the material is a semiconductor.

**8.** The attenuator of claim 4 wherein the material is birefringent.

**9.** The attenuator of claim 8 wherein the material is lithium niobate.

**10.** The attenuator of claim 8 wherein the material has a thermo-optical effect such that when each of the Mach-Zehnder stages is heated, the refractive index of the first Mach-Zehnder stage is modified to create a phase shift of about 0 to $\pi$ and the refractive index of the second Mach-Zehnder stage is modified to create a phase shift of about $2\pi$ to $\pi$.

**11.** A polarization-insensitive broad-band variable optical attenuator comprising:

a first Mach-Zehnder configuration optical waveguide network (MZI);
a second Mach-Zehnder configuration optical waveguide network (MZI) cascaded to the first Mach-Zehnder network, wherein each Mach Zehnder network has an input waveguide optically coupled with an output waveguide by the series combination of a first power coupler, two interference arm waveguides optically in parallel, and a second power coupler, wherein at least one interference arm waveguide of each network is provided with an optical phase shift adjuster such that the optical phase shift adjuster varies one of the MZIs from 0 to $\pi$, and $2\pi$ to $\pi$ in the other MZI.

**12.** The attenuator of claim 11, wherein the adjuster comprises a path length adjuster for providing a total path length difference of about $\lambda$ between the two Mach-Zehnder networks such that one of the Mach-Zehnder networks comprises a path length difference of about $\lambda$ with the one interference arm waveguide being longer than the other interference arm waveguide by about $\lambda$ and the other Mach-Zehnder network is symmetric.

**13.** The attenuator of claim 11, wherein the adjusters comprise electrical heating elements.

**14.** The attenuator of claim 11, wherein the adjusters comprise electrical heating elements for a common negative dn/dt thermo-optic material for the two MZI's located respectively in the longer interference arm waveguide of one of the Mach-Zehnder networks, and in the shorter interference arm waveguide of the other Mach-Zehnder network.

**15.** The attenuator of claim 11, wherein the first and second MZI's provide attenuation as a function of

$$Att = Cos^2\left(\frac{\pi}{\lambda}\frac{\partial n}{\partial T}L\Delta T_1\right)Cos^2\left(\frac{\pi}{\lambda}(n\delta - \frac{\partial n}{\partial T}L\Delta T_2)\right)$$

**16.** The attenuator of claim 11, wherein the adjusters comprise electrical heating elements located on the one interference arm waveguide of each symmetric network wherein the electrical heating element on one of the network is heated such that the phase difference between the two interference arm waveguides of that network is between 0 and π and the electrical heating element on the other network is heated such that the phase difference between the two interference arm waveguides of that network is between 2π and π.

**17.** The attenuator of claim 11, wherein the adjusters comprise electrical heating elements located on the one interference arm waveguide of the first network having symmetric arms and on the shorter interference arm of the second network having asymmetric arms wherein a path difference corresponding to 2π exists between a longer arm and a shorter arm, wherein the electrical heating element on the symmetric network is heated such that the phase difference between the two interference symmetric arm waveguides of that network varies between 0 and π and the electrical heating element on the shorter arm of the asymmetric network is heated such that the phase difference between the two interference arm waveguides of that asymmetric network varies between 2π and π.

**18.** The attenuator of claim 17, wherein the path difference corresponding to 2π exists between the longer arm and the shorter arm in a wavelength range that is less than 1.5 um for the operating wavelength.

**19.** The attenuator of claim 11, wherein the first and second power couplers each have a coupling ratio varying from 0.43 to 0.57.

**20.** The attenuator of claim 12, wherein the first and second networks are made from the same material having a negative value for the refractive index change over a temperature change (dn/dT).

**21.** The attenuator of claim 20, wherein the same material is a polymer.

**22.** The attenuator of claim 20, wherein the adjusters comprise electrical heating elements located on one interference arm waveguide of the first network having symmetric arms and the longer interference arm of the second network having asymmetric arms wherein a path difference corresponding to 2π exists between a longer arm and a shorter arm, wherein the electrical heating element on the symmetric network is heated such that the phase difference between the two interference symmetric arm waveguides of that network varies between 0 and π and the electrical heating element on the longer arm of the asymmetric network is heated such that the phase difference between the two interference arm waveguides of that asymmetric network varies between 2π and π.

**23.** A method of broad-banding and polarization compensating a variable optical attenuator (VOA) comprising the steps of:

providing a first Mach-Zehnder configuration optical waveguide network having a polarization dependence loss of a first polarity;
cascading a second Mach-Zehnder configuration optical waveguide network to the first Mach-Zehnder network; and
phase-shifting at least one of the two networks such that the second Mach-Zehnder configuration has a polarization-dependent loss (PDL) of an opposite polarity to the first polarity to compensate for the PDL of the first Mach-Zehnder configuration optical waveguide network.

**24.** The method of claim 23, wherein the providing step comprises providing at least one of the two Mach-Zehnder networks with couplers having a coupling ratio between 0.43 to 0.57 for varying the maximum attenuation desired.

**25.** The method of claim 23, wherein the providing step comprises providing each of the two Mach-Zehnder networks with couplers having a coupling ratio about 0.5 for maximizing attenuation for using the VOA as a switch.

**26.** The method of claim 24, wherein the phase-shifting step comprises the step of causing asymmetry on one of the two networks each having a thermo-optic effect such that when each of the Mach-Zehnder networks are heated, the refractive index of the first Mach-Zehnder network is modified to create a phase shift of about 0 to $\pi$ and the refractive index of the second Mach-Zehnder network is modified to create a phase shift of about $2\pi$ to $\pi$.

**27.** The method of claim 26 further comprising the step of applying the same voltage on both networks to vary the attenuation from about 0 to the maximum attenuation required

FIG. 1

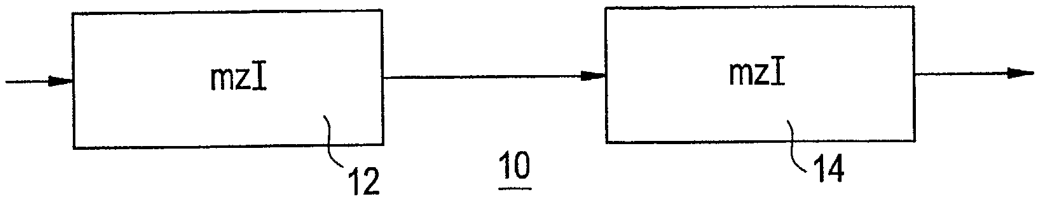


FIG. 2

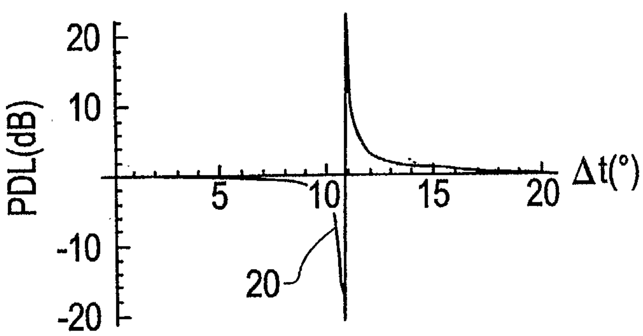


FIG. 3

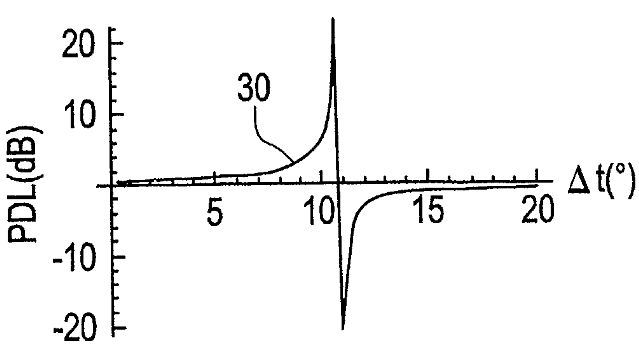

FIG. 4

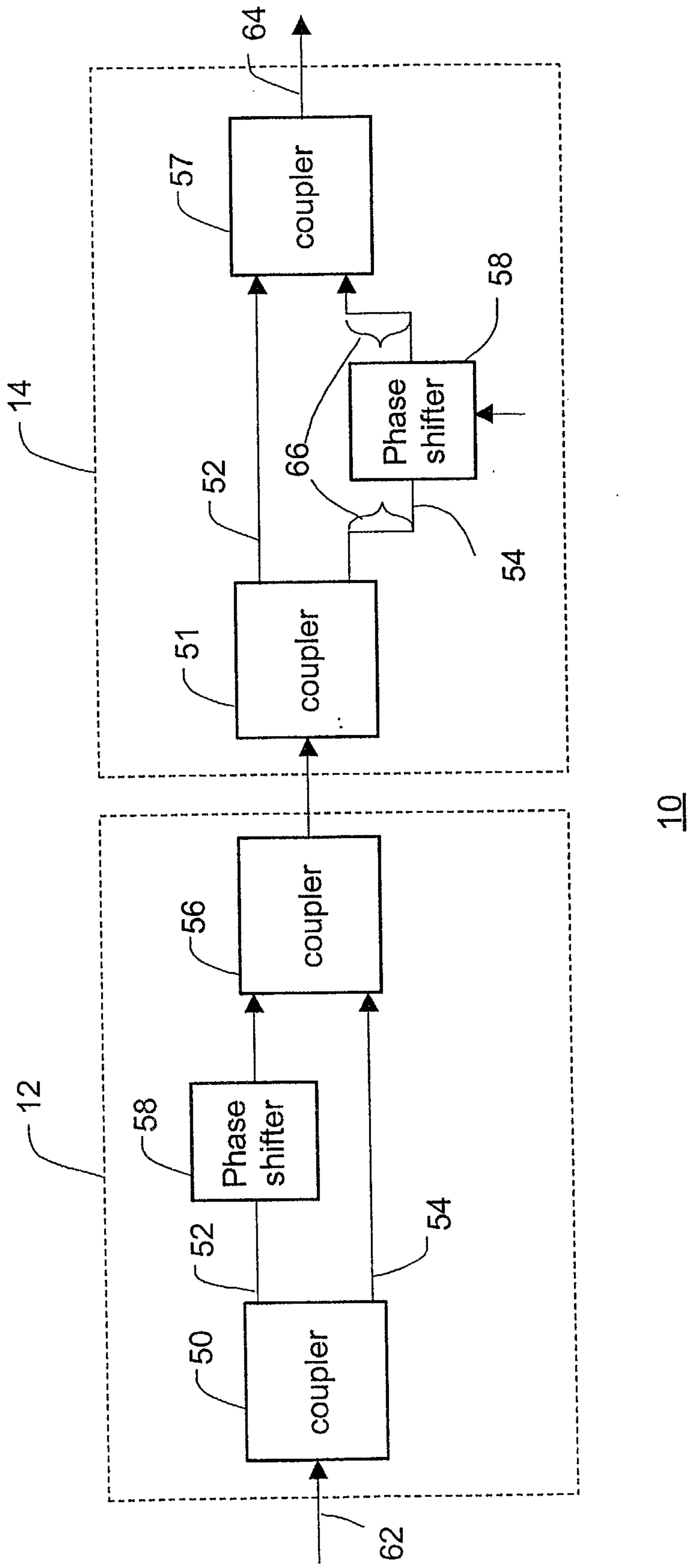
62
50
coupler
52
54
58
Phase shifter
12
56
coupler
51
coupler
14
52
66
54
58
Phase shifter
57
coupler
64
10

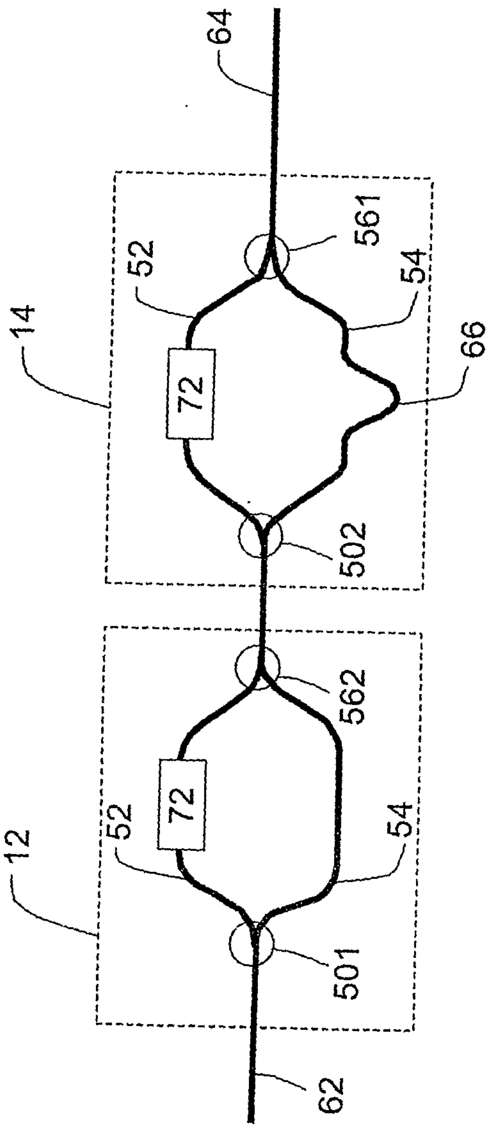


FIG. 5

FIG. 6

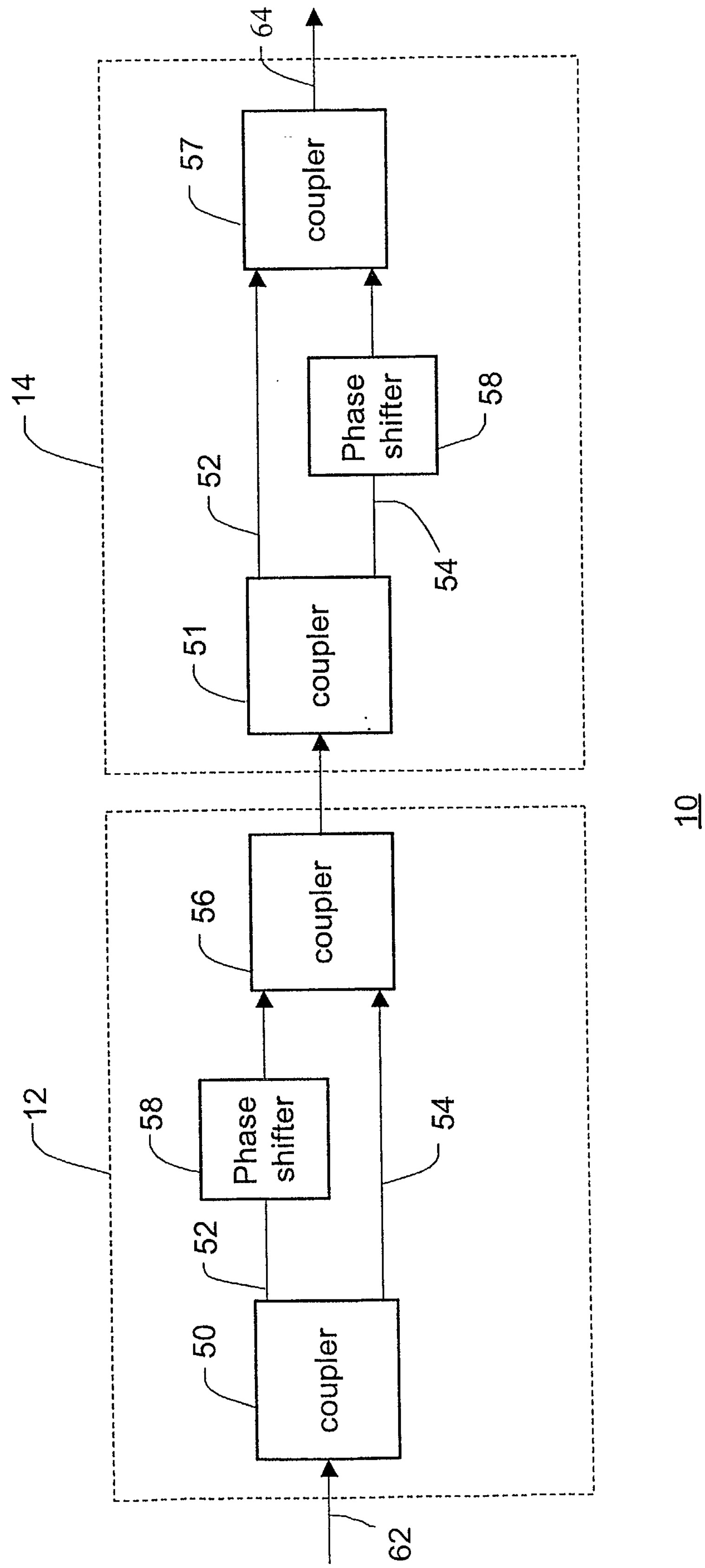

FIG. 7

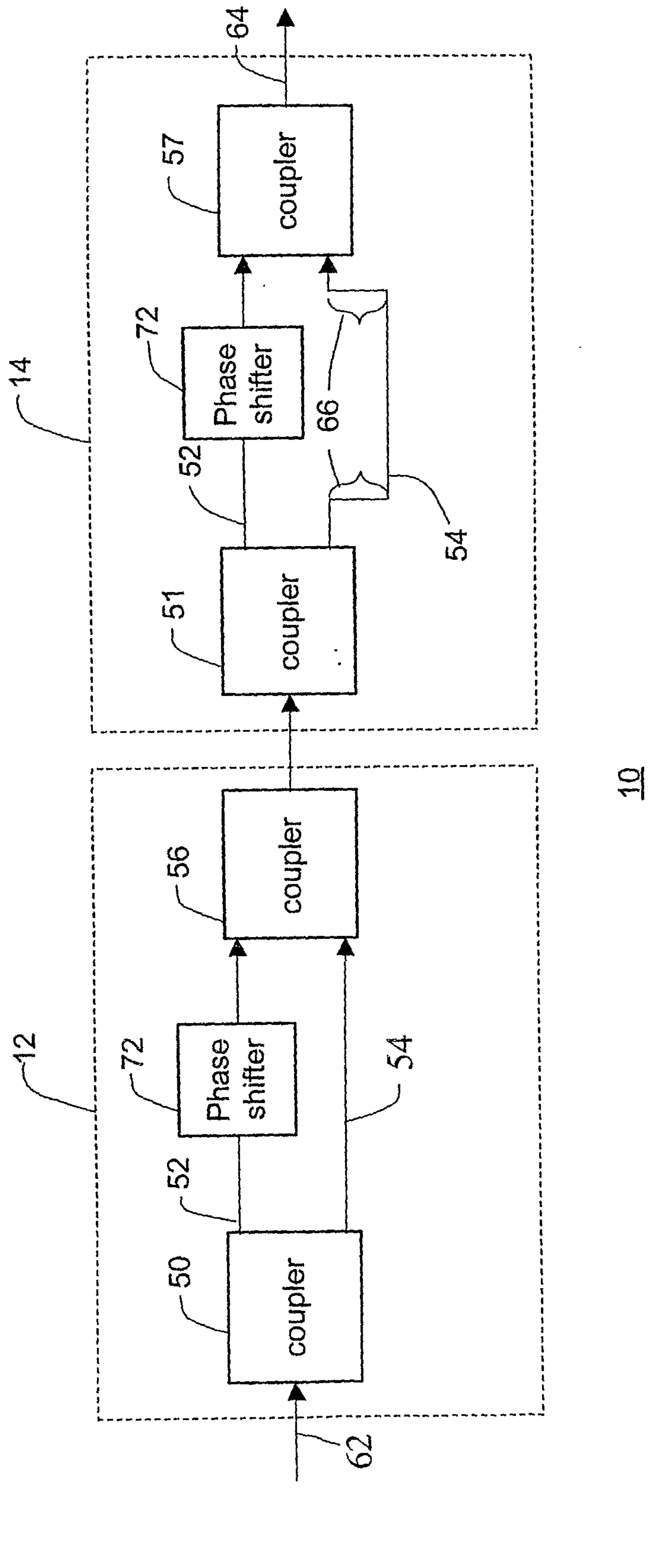
64
57
coupler
72
Phase shifter
14
66
52
54
51
coupler
coupler
56
12
72
Phase shifter
54
52
50
coupler
62
10

FIG. 8

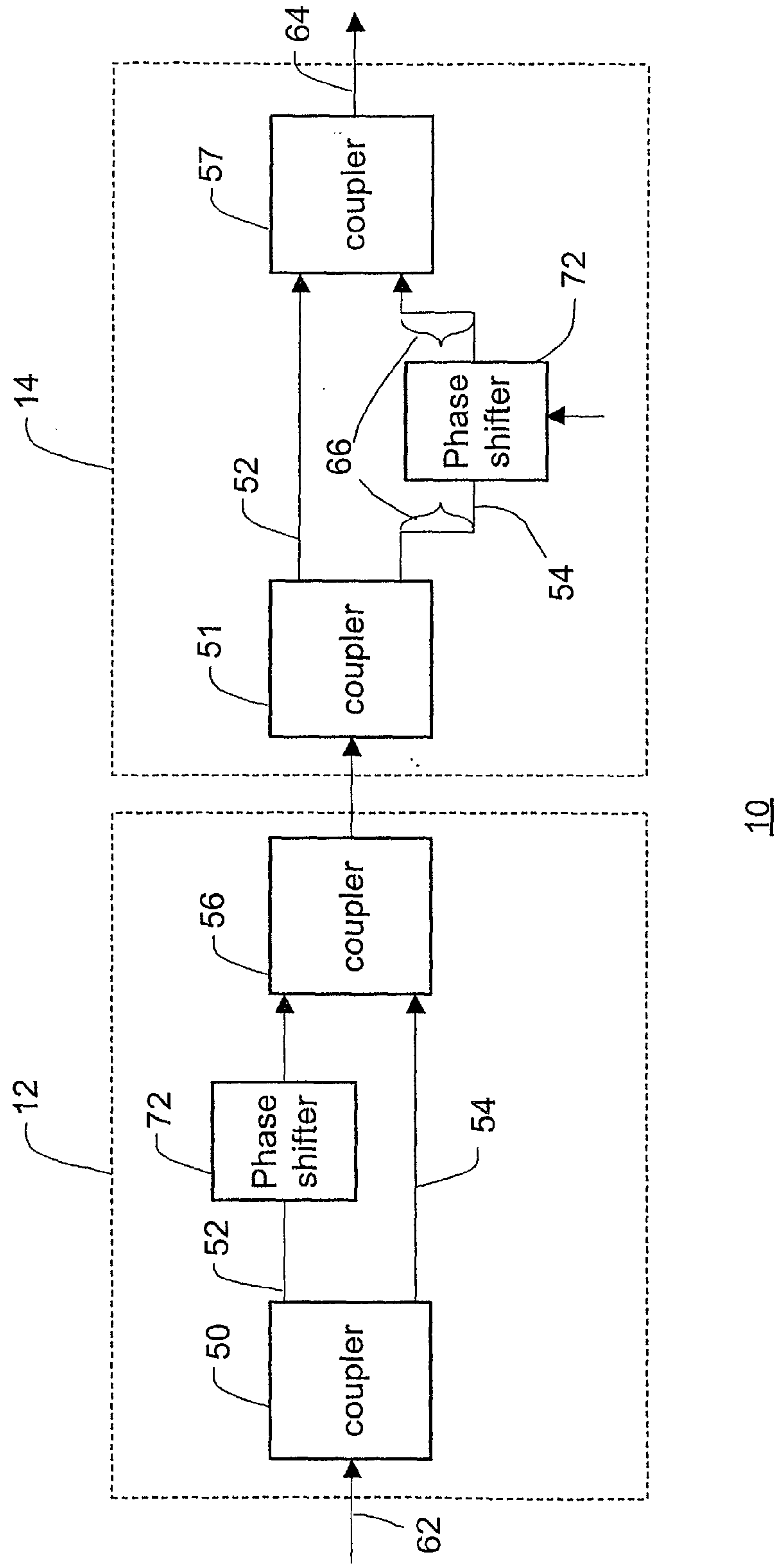
64
coupler
57
72
14
Phase shifter
66
52
54
coupler
51
coupler
56
10
12
72
Phase shifter
54
52
coupler
50
62

FIG. 9

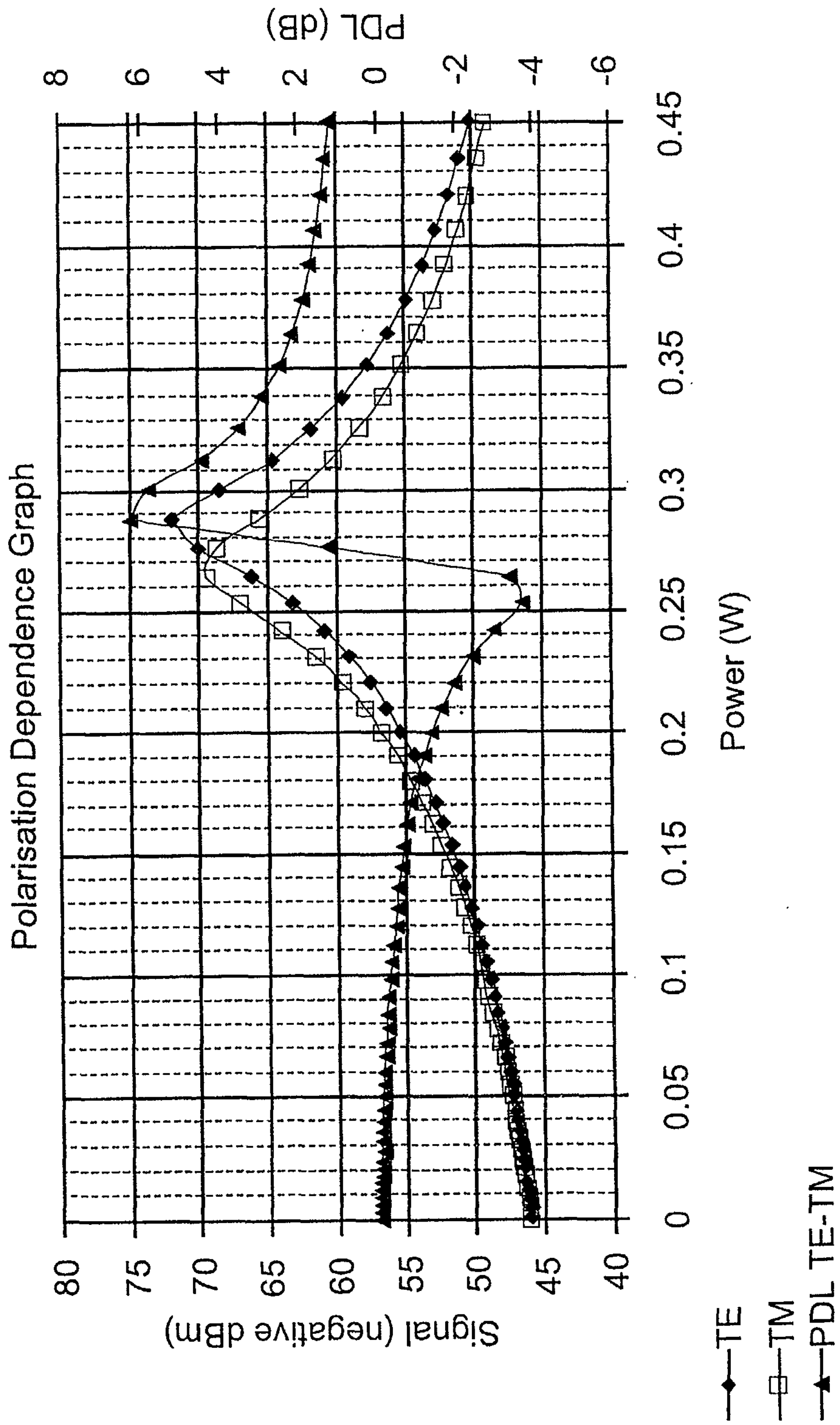
Polarisation Dependence Graph
Signal (negative dBm)
80
75
70
65
60
55
50
45
40
PDL (dB)
8
6
4
2
0
-2
-4
-6
Power (W)
0
0.05
0.1
0.15
0.2
0.25
0.3
0.35
0.4
0.45
TE
TM
PDL TE-TM

FIG. 10

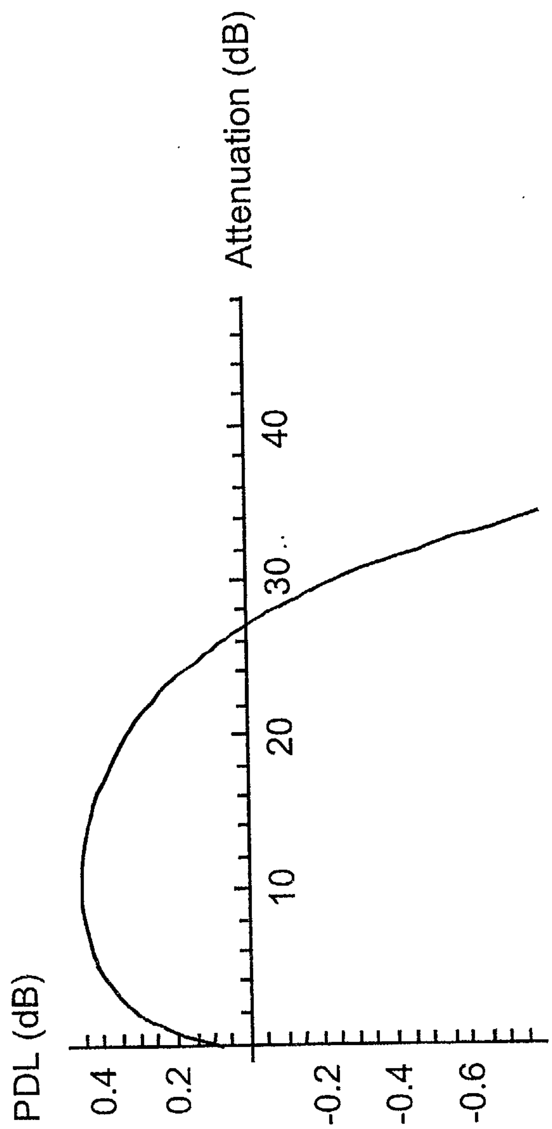

FIG. 11

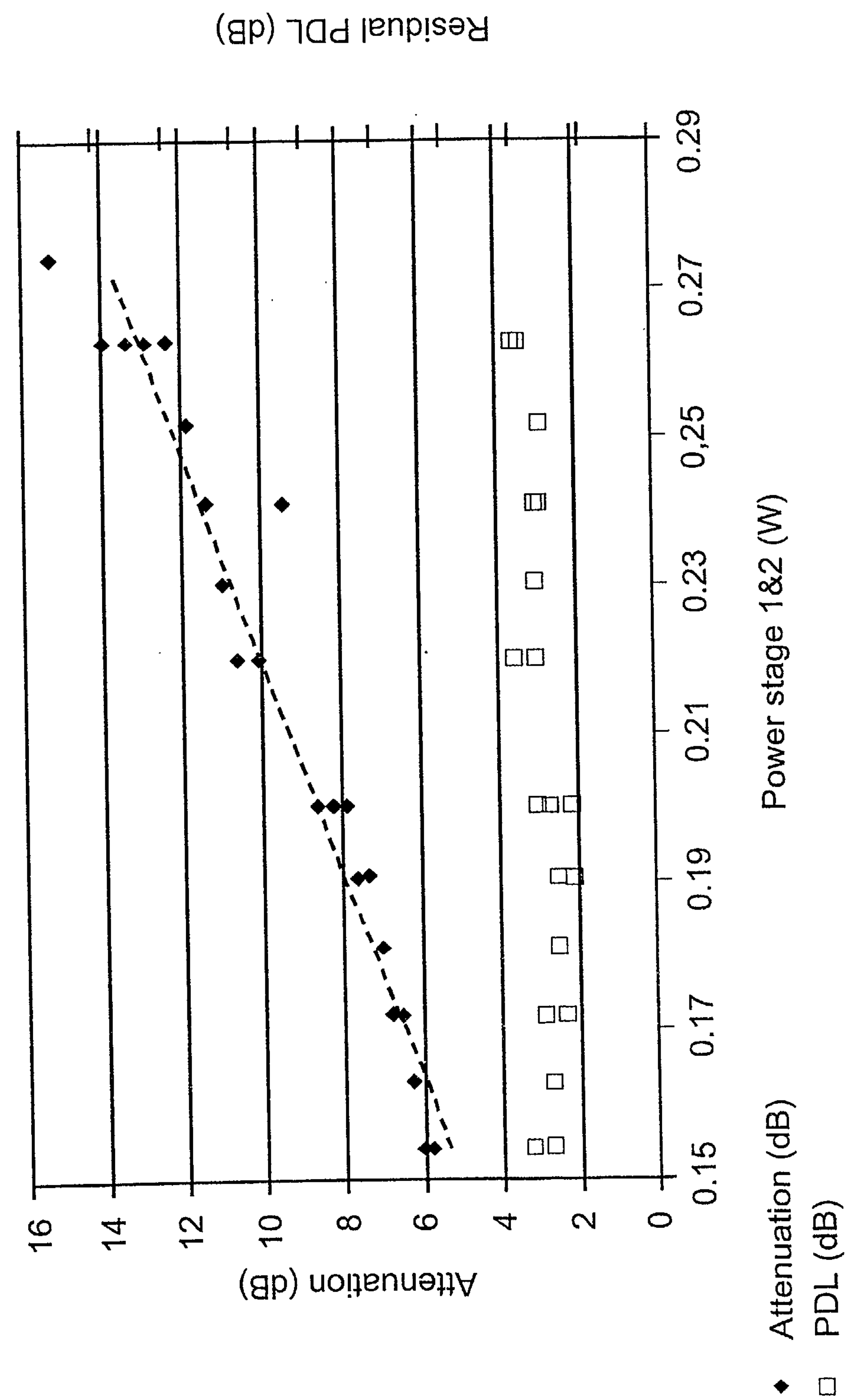
Residual PDL (dB)
Attenuation (dB)
16
14
12
10
8
6
4
2
0
0.15
0.17
0.19
0.21
0.23
0,25
0.27
0.29
Power stage 1&2 (W)
Attenuation (dB)
PDL (dB)

FIG. 12

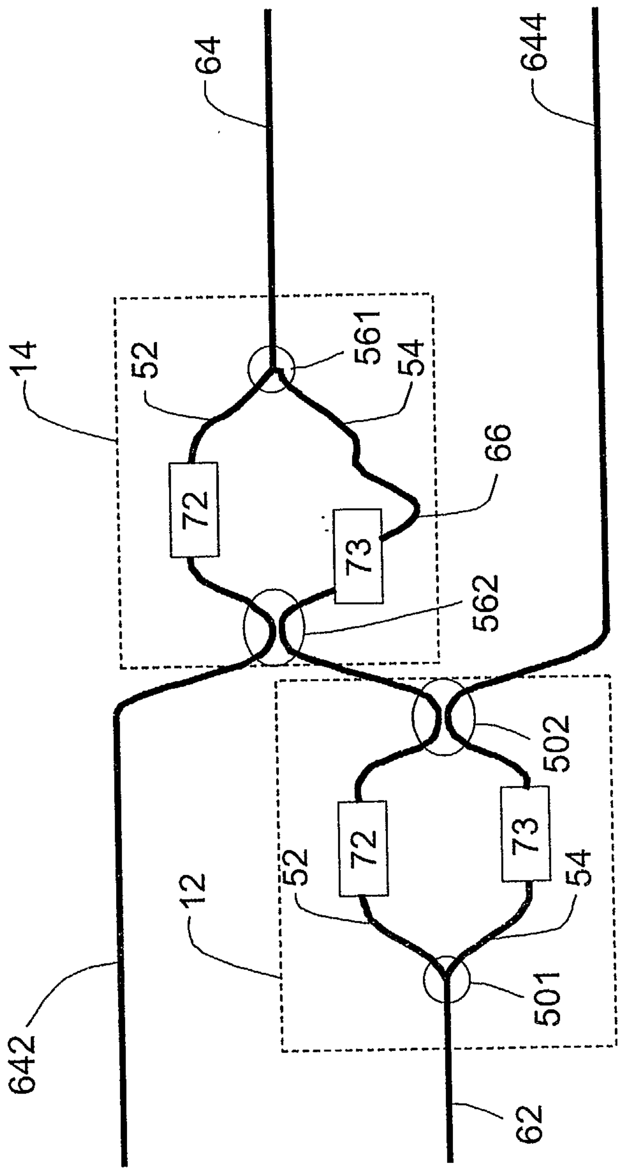

European Patent Office

# EUROPEAN SEARCH REPORT

Application Number
EP 01 40 1964

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 930 412 A (TOUSSAERE ERIC) 27 July 1999 (1999-07-27) * column 4, line 12 - column 4, line 16; figure 3 * | 1,4,6,8, 23-25 | G02F1/225 |
| A | JACKEL J L ET AL: "Thermally tuned glass Mach-Zehnder interferometer used as a polarization insensitive attenuator" APPLIED OPTICS, 1 MARCH 1985, USA, vol. 24, no. 5, pages 612-614, XP002184609 ISSN: 0003-6935 * the whole document * | 1,11,23 | |
| A | EP 1 072 937 A (SUMITOMO ELECTRIC INDUSTRIES) 31 January 2001 (2001-01-31) * abstract; figure 1 * * paragraph '0008! - paragraph '0015! * | 1,11,23 | |

TECHNICAL FIELDS SEARCHED (Int.Cl.7)
G02F

The present search report has been drawn up for all claims

| Place of search | Date of completion of the search | Examiner |
|---|---|---|
| MUNICH | 4 December 2001 | Noirard, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 40 1964

This annex lists the patent family members relating to the patent documents cited in the above-mentioned European search report. The members are as contained in the European Patent Office EDP file on
The European Patent Office is in no way liable for these particulars which are merely given for the purpose of information.

04-12-2001

| Patent document cited in search report | | Publication date | Patent family member(s) | | Publication date |
|---|---|---|---|---|---|
| US 5930412 | A | 27-07-1999 | FR | 2749945 A1 | 19-12-1997 |
| | | | EP | 0816896 A2 | 07-01-1998 |
| EP 1072937 | A | 31-01-2001 | AU | 3194800 A | 30-01-2001 |
| | | | AU | 4881300 A | 01-02-2001 |
| | | | CN | 1281973 A | 31-01-2001 |
| | | | EP | 1072937 A1 | 31-01-2001 |
| | | | WO | 0105005 A1 | 18-01-2001 |

EPO FORM P0459

For more details about this annex : see Official Journal of the European Patent Office, No. 12/82